# EUROPEAN PATENT APPLICATION

(11) **EP 3 062 584 A1**
(43) Date of publication of application: **31.08.2016**
(21) Application number: 15185483.3
(22) Date of filing: 16.09.2015
(51) Int. Cl.: H05B 1/02, B65D 81/34, H05B 3/06

(54) **A FOOD PACK**

(30) Priority: 26.02.2015 GB 201503189
(71) Applicant: Kostka, Pavel, 253 01 Hostivice (CZ)
(72) Inventor: Kostka, Pavel, 253 01 Hostivice (CZ)

(57) **Abstract**

The present invention describes various embodiments of food packs heated by disposable electric heaters adapted for use in a 12-volt vehicle. More particularly, a food pack comprises a foodstuff (100) and a disposable resistive heater (106). The foodstuff includes bread (102) and a filling (104) disposed substantially inside the bread. The food pack is configured so that the heater, in use, evenly heats the foodstuff from its inside. A thermal gradient is established between a heating portion of the heater and an outer surface of the bread. The bread serves as thermal insulation of the heater. The food pack comprises a one-time thermal fuse that bums out upon exceeding a maximal temperature of the heating portion. The heater can have a connector and wires for connecting to a car lighter connector or a cover allowing safe disposal of the heater after use. Foodstuff can include more bits with different tastes that are arranged for co-heating, e.g. a salty-sweet combination.

## Description

### TECHNICAL FIELD

The present invention relates to the field of disposable heating devices arranged together with a foodstuff to be heated.

### BACKGROUND OF THE INVENTION

One-off food packs with a built-in heater are known in several modifications. They can be distinguished according to the type of heater and the state of matter of the foodstuff to be heated.

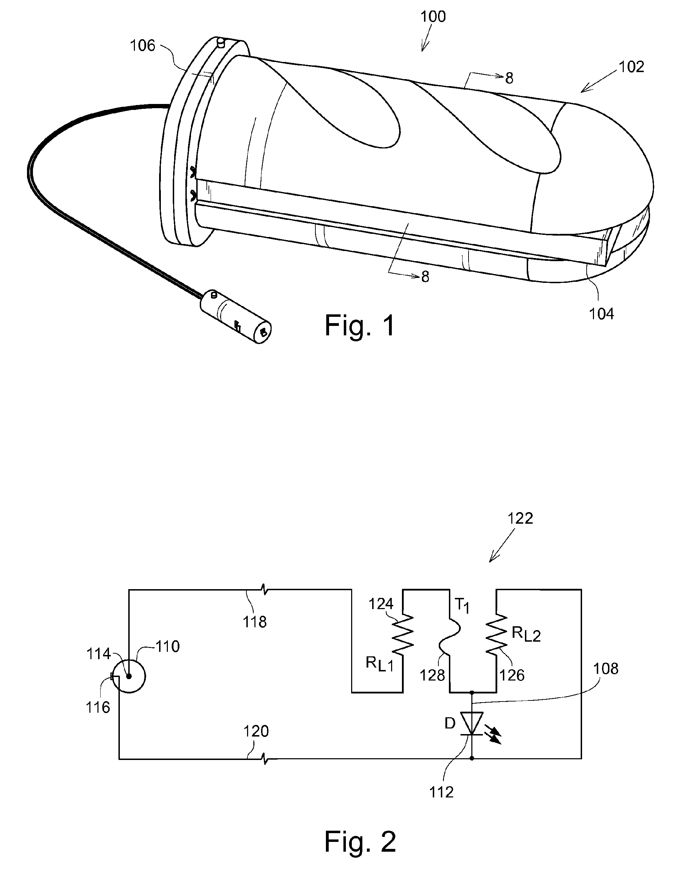

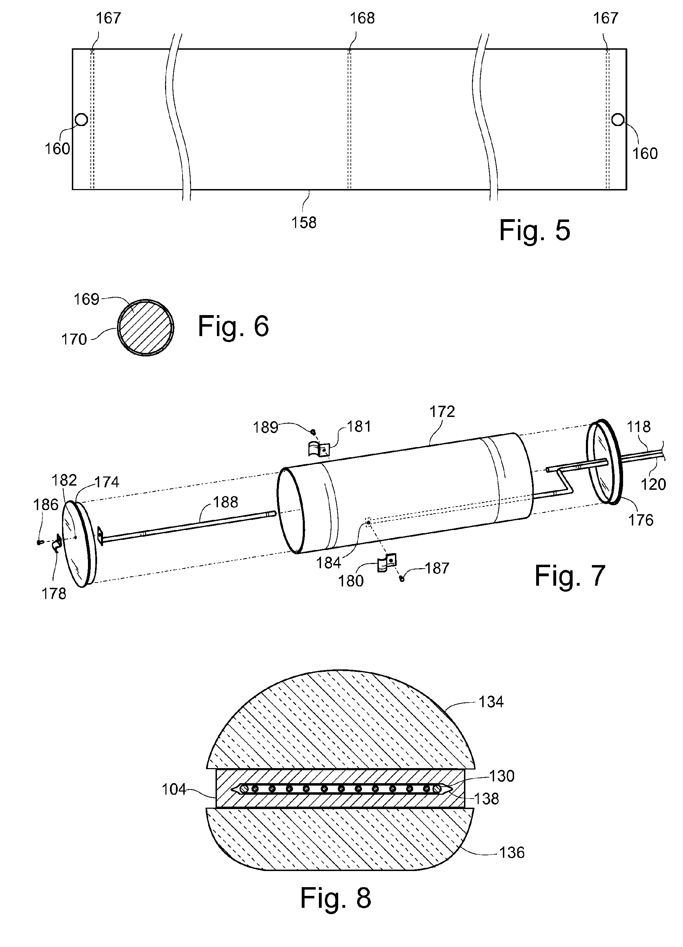

Patent GB900517A granted to Paul Eisler on July 18th, 1958 describes Electric Resistance Surface Heating devices. The document teaches on solid and liquid foodstuff heated from its surface by a thin conductive film that is either laminated on a foodstuff wrapper or on a separate foil. Though the heating foil itself can be used up to 600 F, safety of the heating of the foodstuff is not taken into consideration when such food pack is used at elevate temperatures. For instance, the example shown in Fig. 1 of Eisler's patent comprises a bag of granular potato crisps with a loosely disposed heating film arranged so that the film heats in use surfaces of the crisps. Convection of heated air is a primary heat distribution way inside the bundle due to the granularity and irregular shapes of the crisps that do not in general follow the shape of the heating film. The film itself can move within the bag during transportation and during the heating. Thus the heating must be either carefully controlled so that the temperature does not exceed a temperature that is considered safe for touching, typically around 50 °C, the resistance of the film with regard to the power-supply voltage must be chosen so that the stagnation temperature within given environment will be below such safe temperature, or the pack must be provided with an extra thermal insulation. Similarly, Fig. 7 shows a heating film that is immersed in a bottle of a liquid. Thermal convection in the liquid distributes the heat evenly so that the same or nearly same temperature is on the surface of the bottle. That means the same as described for the Fig. 1, i.e. it is necessary either to keep the temperature within the limits safe for touching or provide an additional insulation.

Yet another approach to an on-demand heated foodstuff is disclosed in US3548738 and US4016301 documents. Authors teach on food packs having substantially conductive electrodes immersed directly in a water-containing foodstuff. An ionic salt, typically NaCl, is dissolved in the water and heating is achieved by passing alternating electric current through so-formed electrolyte. Maximal concentration of the ionic salt that can be dissolved without spoiling the taste of the foodstuff restricts minimal conductivity of the electrolyte. Thus, heating is carried out in a range of 115-340 volts as explained in examples I-LXI of US4016301 or by 110 volts as described in US3548738. That voltage is above the touchable low-risk range (declared as an extra-low voltage in IEC 60449). Further, such heating process can't be carried out by direct current, which is the standard in e.g. vehicles, since in that case the salt would be electrolyzed and food would contain inedible ingredients such as sodium hydroxide and chlorine (in case of NaCl).

Despite many tries in the past, except for rather a niche use of chemically-heated cans and cups, there isn't any massive penetration of the heated packs in the market so far. One of the reasons for that could be readiness to use the food packs, safety of heater, quality of so-heated foodstuff, amount of waste and with that associated imbalance between costs of the heater and the foodstuff.

On the other hand, cooled fresh foodstuff (e.g. sandwiches or baguettes sold on petrol stations, through vending machines in business areas, or in supermarkets) still poses a viable alternative to hot fast food in areas, where a fast-food shop can't be built or is not economically viable. Thus, there remains a space for a food pack that could be taken away, subsequently heated, and that leaves minimum waste.

### BRIEF SUMMARY OF THE INVENTION

The present invention relates to electrically-heated food packs. More particularly, such food pack comprises a foodstuff and a disposable resistive extra low voltage heater. The foodstuff includes bread and a filling disposed substantially inside the bread. The foodstuff has an insert section configured inside thereof. The heater includes a heating portion adapted to be disposed, in use, in the insert section, and thermally coupled to at least a part of the filling.

According to one preferred configuration, the food pack has a maximal projected first area on a projection plane, the heating portion, in use, has a second area projected on the projection plane, and the second area intersects 60%-100% of the first area.

According to another preferred configuration, the filling has a projected third area on the projection plane and the third area, in use, intersects 60%-100% of the second area.

The food pack can be wrapped in a wrapping, wherein at least a part of the wrapping is transparent, exposes at least a part of the filling, and has a melting temperature between about 170 °C and about 268 °C.

According to another preferred configuration, the heating portion is configured to reach a temperature between about 60 °C and about 230 °C in use.

The heater can comprise a thermal one-time fuse configured to burn out upon reaching a predetermined temperature of the foodstuff.

The heater can comprise a thermal one-time fuse configured to burn out upon exceeding a predetermined maximal allowed temperature of the heating portion.

The heater can comprise an electric power connector.

The heater comprises a resistive wire that includes an electrically conductive material that can be substantially made from iron.

The food pack can further include a cover adapted for thermal insulation of the heating portion.

The foodstuff can further comprise an additional sweet food differing in taste from the filling, wherein the sweet food is also thermally coupled to the heating portion.

The heater can have at least two different electric power connectors configured for connecting the heater to a power supply.

The heating portion can be oiled.

The insulating cover can be expandable.

### BRIEF DESCRIPTION OF THE DRAWINGS

The invention will be more clearly understood from the following description given by way of example only, with reference to the accompanying figures.
Fig. 1 is a perspective view of a food pack according to the present invention.
Fig. 2 is an electric scheme of a heater.
Fig. 3 an exploded view of the food pack.
Fig. 4 is an exploded view of the heater.
Fig. 5 is a top schematic view of an unfolded casing.
Fig. 6 is a schematic enlarged cross-sectional view of a resistive wire.
Fig. 7 is an exploded enlarged view of a connector.
Fig. 8 is a cross-sectional view of the food pack.
Figs. 9-11 schematically illustrate preferred relations between components of the foodstuff and the heater, particularly Fig. 9 is a schematic perspective view demonstrating projected areas of particular components, Fig. 10 is a schematic enlarged view showing preferred relation between bread and a heating portion, and Fig. 11 is a schematic enlarged view showing preferred relation between a filling and the heating portion.
Figs. 12-14 show a modified heater and an insulating cover, wherein Fig. 12 is a perspective view of the heater and the insulating cover, Fig. 13 is a perspective rotated view of a block of connectors shown in Fig 12, and Fig. 14 is a fragment of electric scheme demonstrating interconnection of the connectors shown in Fig 13.
Figs. 15-17 show another heater, wherein Fig. 15 is a perspective view of the heater, Fig. 16 is a perspective partially expanded view of a heating element, and Fig. 17 is an enlarged perspective view of a portion of a wire holder.
Figs. 18-19 show another food pack, wherein Fig. 18 is a schematic cross-sectional view of the food pack and Fig. 19 is a detail of the filling shown in Fig. 18.
Fig. 20 shows a cross-sectional view of a different configuration of a food pack.
Fig. 21 shows a cross-sectional view of yet another configuration of a food pack.
Figs. 22-24 show a food pack having another configuration of an insulating cover, wherein Fig. 22 is a cross-sectional view of the food pack, Fig. 23 is a detail shown in Fig. 22 and Fig. 24 is a cross-sectional view of a heater having covered its heating portion by the cover.

### DETAILED DESCRIPTION OF THE INVENTION

Technical terms used in the text are defined in the section Glossary below.

Fig. 1 is a perspective view of a food pack intended to be used in a vehicle. The food pack comprises a foodstuff 100 and a disposable resistive extra-low-voltage heater 106. The foodstuff 100 comprises bread 102 and a filling 104.

Fig. 2 is an electric scheme of the heater 106. The heater 106 comprises a connector 110 having a plus pole 114 and a minus pole 116, a heating element 122, a thermal fuse T₁ 128, a light emitting diode (LED) D 112, and (numbered) wires 118, 120, and 108. The heating element 122 is segmented into a resistive wire R_{L1} 124 and a resistive wire R_{L2} 126. The plus pole 114 is connected through the wire 118 to R_{L1} 124 that is in-series connected to T₁ 128. The T₁ 128 is connected to the R_{L2} 126. The R_{L2} 126 is via the wire 120 connected to the minus pole 116. The D 112 and R_{L2} 126 are connected together, via the wire 108, in parallel. Ratio of resistivity of R_{L1} 124 and R_{L2} 126 is chosen so that the voltage level at R_{L2} 126 corresponds to the D-112-volt-ampere characteristics, typically (depending on the type and the colour) between 2.7-3.2V. The heater 106 is designed to be powered by an extra-low-voltage supply that is considered safe for unintended touching and thus needs a minimal electrical insulation. Preferred voltage can be within the lower half of the extra-low-voltage range, typically the food pack can be energized by 12-24 volts.

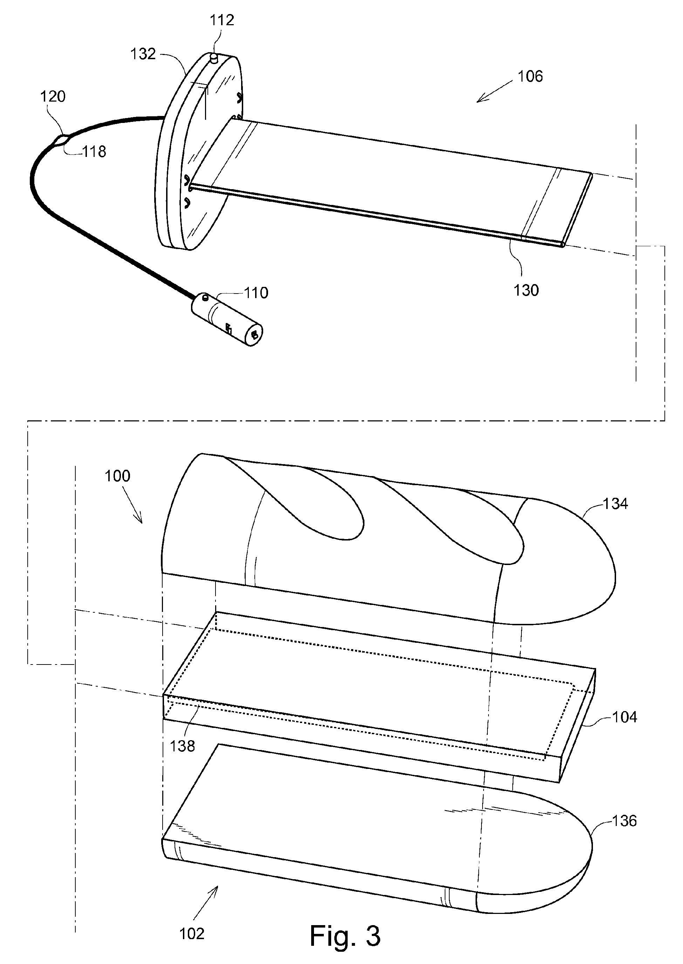

Fig. 3 is an exploded view of the food pack. The heater 106 includes an insulated handle 132 incorporating the D 112, a heating portion 130, the wires 118 and 120 (separation of the wires in the figure is only for denoting purpose), and the connector 110. The bread 102 has an upper portion 134 and a lower portion 136. The filling 104 is disposed substantially inside the bread 102, in this example it is layered between the upper portion 134 and the lower portion 136. The foodstuff 100 has an insert section 138 configured inside thereof, particularly in this embodiment inside the filling 104, e.g. made by a knife. The filling 104 is e.g. a slice of pre-grilled minced meat (dressing and other usual ingredients not shown).

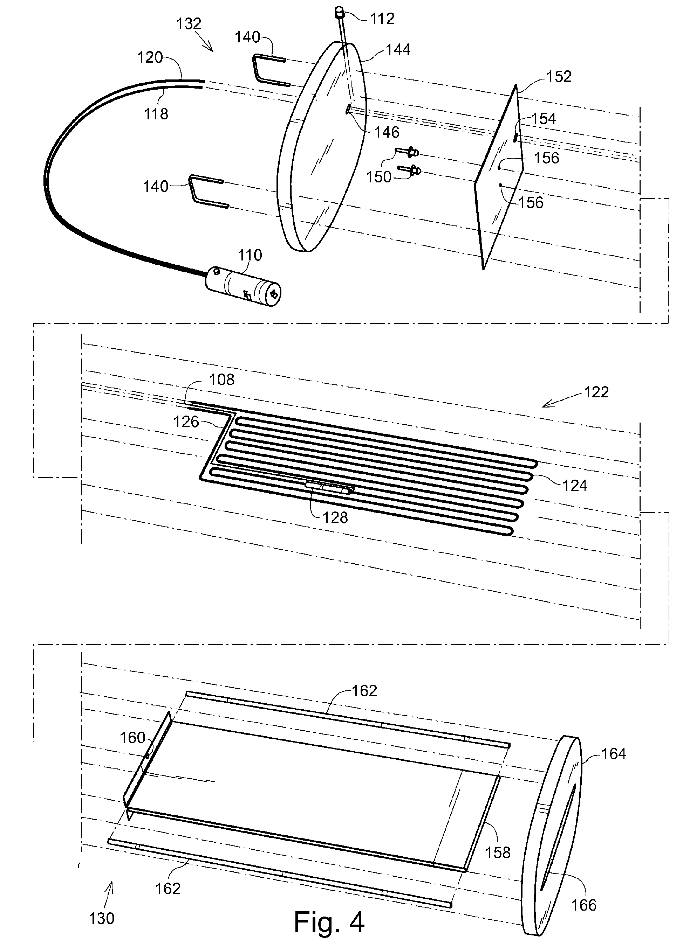

Fig. 4 is an exploded view of the heater 106. The heating portion 130 includes the heating element 122, the fuse 128, a casing 158, a couple of edge supports 162, and the wire 108. The insulated handle 132 comprises a support 152, an insulation block 144, an insulation block 164, a couple of staples 140, the diode D 112, and a couple of rivets 150. The heating element 122 is encased in the casing 158. The couple of edge supports 162 fasten the edges of the casing 158. The couple of rivets 150 passing through a couple of openings 156 and a couple of openings 160 (only one is visible) attach the support 152 to the casing 158. The wires 118 and 120 pass through an opening 146 in the insulation block 144 and through an opening 154 in the support 152 and are electrically connected to the heating element 122. The wire 108 and the wire 120 are connected to the diode D 112. The insulation block 164 has an opening 166 corresponding to the width and thickness of the casing 158. The casing 158 is pushed through that opening 166 and together with the insulation 144 encloses the support 144. The insulation 144 and insulation 164 are stapled by the couple of staples 140.

Fig. 5 is a top schematic view of the casing 158 that is shown as unfolded. The casing 158 can be a thin sheet of aluminium or iron, typically between 100-500 micrometres thick, that is, during manufacturing process, folded in a couple of folds 167 and a fold 168 into the shape shown in Fig 4.

Fig. 6 is an enlarged schematic cross-sectional view of the resistive wires R_{L1} 124 and R_{L2} 126. Each wire comprises an electrically-conductive material 169 and an insulation 170.

Referring to Figs. 4-6: As the heater 106 is intended to be for a single use only, the materials used shall be predominantly cheap, non-toxic, recyclable and/or biodegradable. The heating portion 130 can be beneficially stiff enough so that it can be inserted into the foodstuff without any additional tool during fabrication. Taking that into consideration, the material 169 can be for instance made substantially from iron. Iron is cheap, non-toxic and easily degradable. The insulation 170 can be e.g. polyethylene terephthalate (PET), Nylon 6-6, polytetrafluoroethylene (PTFE) or polyimide film. The insulation 170 can be coated on the material 169 as a film of thickness 10-100 micrometres, e.g. by drawing the material 169 through a bath of the melted insulation 170. Though the material can be of any shape, a round wire, e.g. available as a MIG-welding wire, can be beneficially used, typically of 0.2-1 mm in diameter. Electrical resistivity of iron is roughly one order of magnitude higher than resistivity of e.g. aluminium and it can be thus used for heating purpose while wires 118 and 120 can be made e.g. from aluminium, thicker iron wires, etc. The wires 118 and 120 can be either coated by the same insulation, or, more preferably, by a more easily biodegradable one, e.g. by a thin film from ethyl cellulose, cellophane™, etc. The length of the wires shall be as short as practically possible so as to minimize waste but still to allow a consumer to conveniently insert it into a power connector of a vehicle and leave it heating in a vertical position, typically 15-30 cm in length. Thickness of the wires 118 and 120 shall be chosen according to the current density so that consumer can touch them even after the end of the heating process. Typically for aluminium, the thickness of the material 169 can be between 1-1.5 mm in diameter. The wire 108 can have a minimal thickness, e.g. 100-200 micrometres, and can be coated equally to the wires 118 and 120. The couple of edge supports 162 are attached to the casing 158 typically by spot welding in CO₂ or argon atmosphere. The couple of edge supports 162 can be optionally omitted and the edges of the casing 158 folded and spot-welded together instead. Each of the insulation blocks 144 and 164 can be fabricated as a cardboard pocket filled by recycled cellulose and enveloped by sulphite or baking paper. The cardboard and cellulose can be impregnated by sodium bicarbonate, borax or another green fire retardant to improve fire safety. The support 152 can be made from the same material as the casing 158 and it can made more rigid by grooves (not shown). The couple of rivets 150 can be either replaced by staples or the casing 158 can be spot welded to the support 152. The diode D 112 can be of any type and shall be optimized for the cost and amount of material used. It can be e.g. a 3-mm round LED. The diode indicates that the heater is in operation. It can be alternatively either replaced by another notification element (e.g. acoustic) or can be omitted completely.

The fuse 128 a thermal one-time fuse configured to burn out upon exceeding a predetermined maximal allowed temperature of the heating portion. The fuse 128 is also optional and can be used in the case when a design operating temperature during heating process is close to the maximal usable temperature of the insulation 170, typically 20-30 °C below the melting point of the insulation 170. It can be a standard thermal fuse commercially available e.g. from NEC^{®} manufacturer having product number NEC TSFxxx, wherein xxx indicates burn-out temperature. The fuse 128 can be alternatively manufactured equivalently to a fuse 222 (see below).

The connector 110 can be optionally omitted and the heater 106 can have only exposed electrical contacts of the heating element 122. It could be useful and cheaper if used in an environment with a proprietary extra-low-voltage power supply, e.g. in a vending machine equipped with a power supply intended to heat the pack before dispensing.

The heating element 122 can be alternatively manufactured as a thin metallic meandering film, e.g. from aluminium, laminated between two plastic sheets (e.g. from PET, Nylon 6-6, PTFE or polyimide foil).

Operating temperature, and with that corresponding resistivity of R_{L1} 124 and R_{L2} 126, shall be determined experimentally according to the particular type of foodstuff. Preferably, the heating portion 130 is configured to reach a temperature between about 60 °C and about 230 °C in use, more preferably between about 80 °C and about 180 °C.

Fig. 7 is an exploded enlarged view of the connector 110. The connector 110 comprises a tubular hollow connector body 172, caps 174 and 176, an electric contact 180, an electric contact 178, an electric contact 181, rivets 186, 187 and 189, and an auxiliary wire 188. The connector body 172 and the caps 174, 176 are preferably made from a recyclable material, typically from layered recycled paper or cardboard. The connector 110 is internally interconnected similarly to any other vehicle connector, i.e. the contact 178 is through an opening 182 in the cap 174 and by the rivet 186 connected to the wire 188, the contact 180 is through an opening 184 by the rivet 186 attached to the wire 120, and the wire 188 is electrically contacted to the wire 118. The contact 181 is attached by the rivet 189 to the body 172 and it can be either connected to the wire 120 or can be there only as an elastic element that holds the connector in a socket. The caps 174 and 176 are glued to the connection body 172. The contacts 178, 180, and 181 are made from aluminium or brass. The wire 188 is preferably made from the same material as the wire 118. An electrical fuse can be optionally incorporated into the connector body 172 (not shown).

Fig. 8 is a cross-sectional view of the food pack shown in Fig. 1 illustrating the heating portion 130 disposed in the insert section 138.

### MODE OF OPERATION

Compared to standard grid-powered ovens and grills, having typical cooking power between 1.5-3 kW, food packs are usually used in an environment with a limited power supply. For instance, the food pack according to this first exemplary embodiment is intended to be used in a vehicle. Most of vehicle models provide a 12 V connector that has 12-15 A fuse which means that maximum available power is around 140 W.

Most of baguettes, panini sandwiches, wraps, etc. with a filling have fairly high heat thermal capacity. They are usually sold chilled to ones of degrees of Celsius and it is thus necessary to heat them up at as high power density as technically available so that their consumers can get them heated within reasonable time period, practically within 5-20 minutes. Temperatures of the heating portion that are needed to be achieved are above a maximum touchable range (40-50 °C). For instance, if the food pack is used in a moving car, it is necessary to make sure that the food pack during the heating will not cause any unintended distraction caused by its hot surface. Some foodstuff, e.g. panini sandwiches need temperatures around at least 100 °C, preferably rather around 140 - 170 °C. There is thus a need for a kind of thermal insulation. Such insulation could be provided as an insulating wrapper from a recyclable material, e.g. based on cellulose-based wool, but it costs money and generates waste. The higher such temperature is, the thicker insulation shall be.

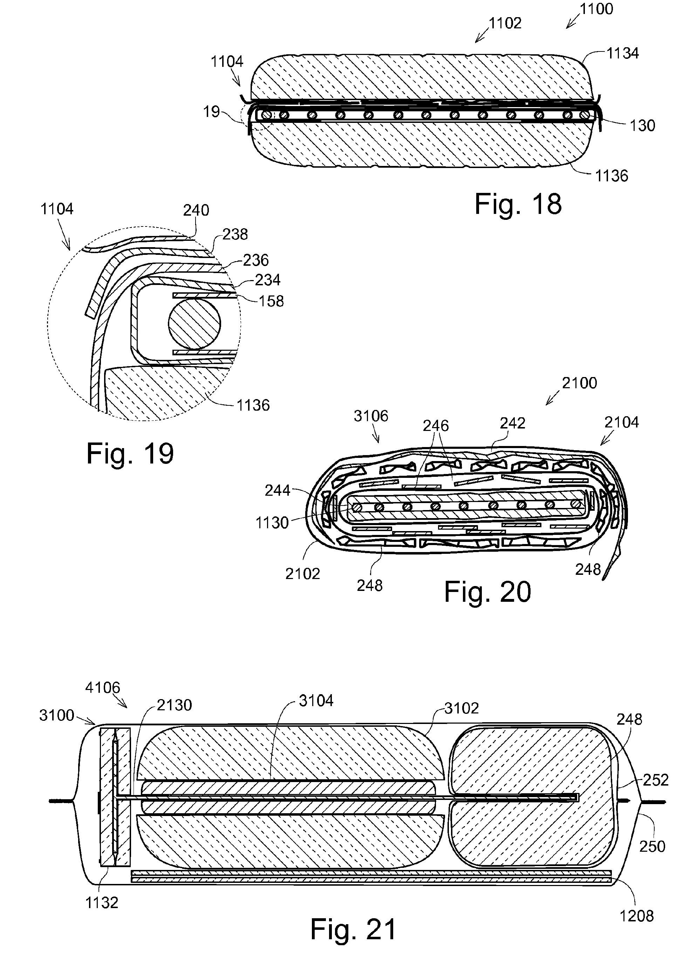

On the other hand, similar heat insulating property can have certain foodstuff itself and can be thus used instead of any additional insulation. Particularly bread, that is the basis for the most of cooled foodstuff, contains a natural gas-trapping structure that retards heat conduction. From the practical perspective, subjective feeling of readiness of prepared food is not primarily assessed by the temperature of the bread but rather by the temperature of the filling, e.g. meat (hot dogs or hamburgers are typical examples). The heating portion 130 is, in use, disposed in the insert section 138. The heating portion 130 touches the inner surface of the insert section (not numbered) and is so thermally coupled to the filling 104. The filling 104 touches, by its outer surface (not numbered), the bread 102. That allows to establish a thermal gradient so that the hottest region will be in the filling 104 or close to the filling 104 and less warm region at the outer surface of the bread 102. A consumer can monitor the heating by touching the surface temperature of the bread. Warm outer surface of the bread indicates to the consumer that filling is already sufficiently hot and that the heating can be terminated. That approach allows to avoid additional insulation and also, as will be shown in Fig. 21, to assess the freshness of the foodstuff (insulation would otherwise cover the foodstuff).

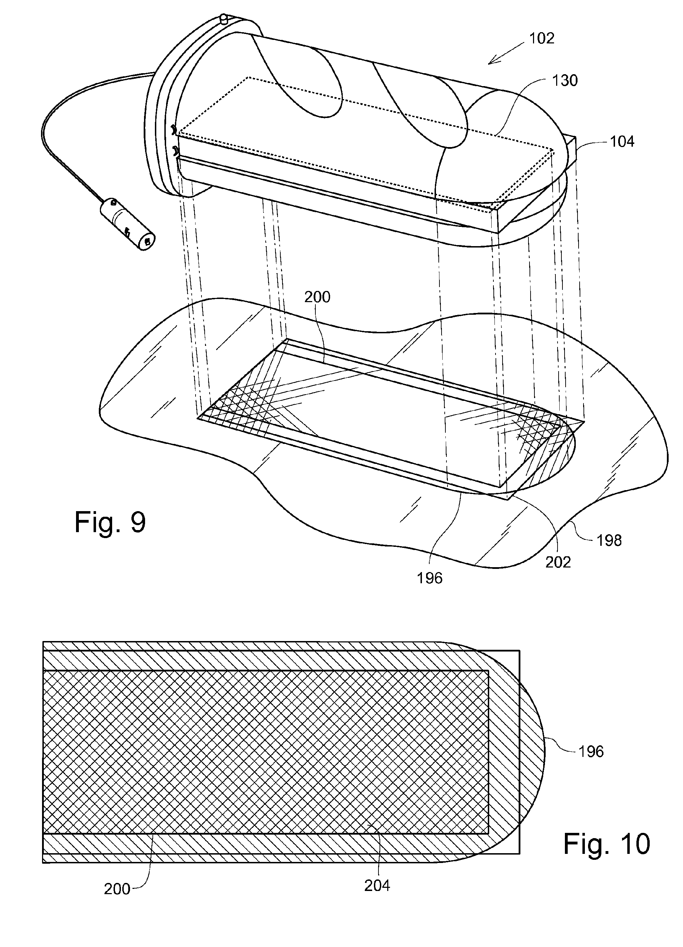

Given the fact that predominantly solid foodstuff has limited thermal conductivity (compared to liquids), it is important to distribute the available thermal power evenly among the foodstuff so as to avoid locally-burned areas. Figs. 10-11 demonstrate two preferred configurations of the foodstuff and the heating portion using relation among projected areas of particular components as defined in Fig. 9.

Fig. 9 is a schematic perspective view demonstrating projected areas of particular components. A maximal projected first area 196 of the bread is projected on a projection plane 198. The plane 198 is arbitrarily chosen so that the first area 196 is maximal. A second area 200 of the heating portion 130 and a third area 202 of the filling 104 are projected on the same plane 198.

Fig. 10 is a schematic enlarged view of the first and second areas shown in Fig. 9 demonstrating preferred relation between the bread and the heating portion. The second area 200 shall, in use, preferably intersect 60%-100% of the first area 196 as denoted by an intersection 204. That configuration allows to reasonably evenly establish the thermal gradient among the majority of the bread.

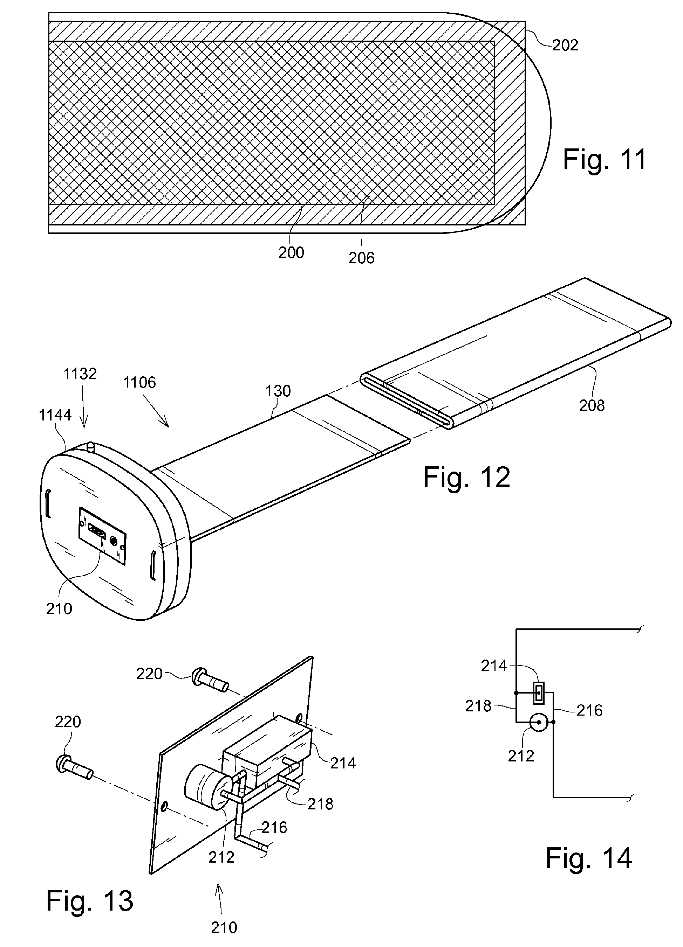

Fig. 11 is a schematic enlarged view of the third and second areas demonstrating preferred relation between the filling 104 and the heating portion 130. The third area 202 shall, in use, preferably intersect 60%-100% of the second area 200 as denoted by an intersection 206. Such geometry allows the heating portion 130 to reasonably evenly heat the majority of the filling 104.

If the intersections 204 and/or 206 are close to 100% of the corresponding areas, additional thermal insulators (not shown) can be provided at the edges of the heating portion 130. The second area can even exceed 100% of the first and third areas as will be shown in Fig. 21.

### DESCRIPTION AND OPERATION OF ALTERNATIVE EMBODIMENTS

Figs. 12-24 show different embodiments. Parts and group of parts with the analogous function but different in a shape, size, or material, compared to the first embodiment illustrated in Figs. 1 to 11, have their referential number increased by one thousand. For instance, parts 106, 1106, 2106, 3106, 4106 and 5106 all represent a heater, though differently sized or shaped. Identical parts have the same referential number in all embodiments.

Figs. 12-14 show a modified heater 1106 and an insulating cover 208.

Fig. 12 is a perspective view of the heater 1106 and an insulating cover 208. The heater 1106 has a block of connectors 210 disposed in an insulated handle 1132 that includes an insulation block 1144.

The insulating cover 208 is preferably made from a biodegradable material, e.g. recycled cardboard, layered recycled paper, or similarly to the insulation blocks 144 and 164. Upon the end of the heating, the heater 1106 is pulled out from the foodstuff and its heating portion 130 is inserted into that cover 208. The cover 208 so thermally insulate the heating portion 130 which allows a consumer to safely dispose the heater 1106 when it is still hot, e.g. by throwing it to a bin or on a floor of a vehicle. Fig. 13 is a perspective rotated view of the block of the connectors 210 shown in Fig 12. This exemplary embodiment shows a food pack that can be sold in business areas where people use computers with extra low-voltage adapters, e.g. notebooks. Such adapters can be used for energizing the heater 1106.

The block of connectors 210 can provide connectors that correspond to the in-such-area-used notebook brands. In this example, the block of connectors 210 comprises a power connector 214 that corresponds to Lenovo^{®} computers and an HP^{®}/Asus^{®}/Acer^{®} power connector 212. Fig. 14 is a fragment of an electric scheme demonstrating interconnection of the connectors 212 and 214.

Referring to Figs. 12-14: A plus pole 218 and a minus pole 216 are each connected in-series to corresponding contacts of the connectors 212 and 214 (not specifically numbered) and used analogically as in the first embodiment to power the heating element 122. Equivalents of the wires 118 and 119 are reduced to an interconnection of the block of connectors 210 with the heating element 122 inside the insulation block 1144 (not specifically shown).

The block of connectors 210, except for the electrically-conductive parts, can be preferably made from any bio-degradable and recyclable material, e.g. from modified cellulose, e.g. ethyl cellulose, or acetate cellulose, or alternatively from e.g. PET. The insulation block 1144, compared to the block 144, is strengthened by a thicker cardboard or layered paper. The insulation block 1144 can so accommodate and hold the block of connectors 210 that is attached thereto e.g. by a couple of rivets 220 (or by gluing, etc.).

Typical voltage range of notebook adapters varies between 16 and 21V. Such voltage variation can be reasonably absorbed by the resistive heating element 122 so that the optimal heating temperature is designed in the middle of the voltage range and the insulation 170 is designed to sustain temperature even at the maximum voltage.

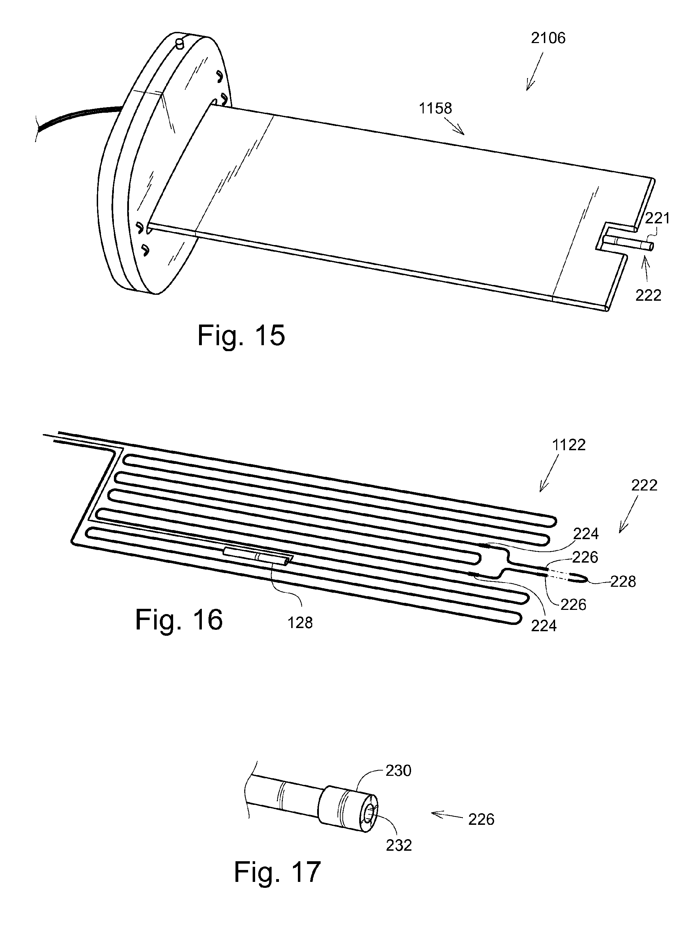

Figs. 15-17 show another modification of the heater.

Fig. 15 is a perspective view of a heater 2106. Fig. 16 is a perspective partially expanded view of a heating element 1122 of the heater 2106. Referring to the Figs 15-16: The heater 2016 has a modified casing 1158 that includes a tube 221 which accommodates a one-time thermal fuse 222. The thermal fuse 222 comprises a low-melting wire 228 and a couple of wire holders 226 that are by a couple of junctions 224 incorporated in between two halves of the heating wire R_{L1} 124 (in the same manner as the fuse 128 between the R_{L1} 124 and R_{L2} 126 in the first embodiment - sections of so divided R_{L1} are not specifically numbered). Fig. 17 is an enlarged perspective view of a fragment of the wire holder 226. It is a wire that has at one end, which is intended to hold the low-melting wire 228, a hollow part made by a tubular section 230 with a cavity 232. During manufacturing, the low-melting wire 228 is inserted into the cavity 232 and the tubular section 230 is mechanically squeezed so that it holds the low-melting wire 228. The tube 221 has electrically non-conductive inner side, i.e. it can be a metallic tube with an inner non-conductive coating, e.g. equal to the insulation 170, or the tube 221 is made from the material similar to the insulation 170. The low-melting wire 28 is made from an alloy that melts, and the fuse 222 thus burns out, upon reaching a predetermined temperature of the foodstuff.

The geometrical disposition of the fuse 222 in the insert section 138 shall be chosen depending on a filling used, particularly on the way of how the heat is distributed in the filling. Once the fuse 222 burns out, the diode D 112 goes out indicating to a consumer that heating is finished. Low-melting alloys are well known in the art. A eutectic alloy of 42% tin and 58% bismuth having melting point of 139 °C can be a non-toxic cheap option. For a lower temperature range, alloys of gallium and/or indium with tin can be used, e.g. Field's metal (32.5% Bi, 51% In, 16.5% Sn) with melting point 62 °C.

The low-melting wire 228 shall have sufficient thickness so that the wire is primarily heated by the surrounding and not by the current passing through it. Similarly, the couple of wire holders 226 shall have their thickness sufficient so that the current passing through them do not contribute significantly to their heating. The couple of wire holders 226 and the couple of junctions 224 are insulated equivalently to the heating wires R_{L1} 124 and R_{L2} 126.

Figs. 18-19 show an alternative geometry of a filling and a heating portion. Fig. 18 is a schematic cross-sectional view of a food pack including a foodstuff 1100 and the heater 106 having the heating portion 130. The foodstuff 1100 comprises a panini sandwich that has bread 1102 having a pre-grilled upper portion 1134 and a lower portion 1136 and an exemplary filling 1104. Fig. 19 is a detail of the filling 1104 shown in Fig. 18. The filling 1104 comprises cheese 236, plurality of salami slices 238 and plurality of onion slices 240. Referring to Figs 18-19: As the panini sandwich needs to be heated at least to the softening point of the cheese 236 and the softened cheese would adhere to the casing 158 of the heating portion 130, a thin slice of a non-sticking edible separator 234, e.g. a thin slice of (salty) pancake, wraps partially the heating portion 130 and separates so the (melted) cheese 236 from the casing 158.

Fig. 20 shows a cross-sectional view of a different food pack. The food pack comprises a foodstuff 2100 and a heater 3106. The foodstuff 2100 includes a wrap of pita bread 2102 and an exemplary filling 2104. The filling 2104 includes a slice of meat 244, plurality of egg slices 246, a plurality of pepper slices 248 and a leaf of lettuce 242. The heater 3106 has a generally different size than the heater 2106 and includes a heating portion 1130 having the thermal fuse 222 (not shown) disposed in the meat 244. The burn-out temperature of the fuse 222 and the geometry of the foodstuff 2100 is chosen so that the heated foodstuff 2100 can have fully heated the meat 244, partially warmed the slices of eggs 246 and peeper 246 and leave the leaf of lettuce 242 cold or nearly cold thanks to thermal gradient made by the different layers. Particular burn-out temperature of the fuse 222 depends of dimensions and needs to be experimentally determined. In that way, only a part of the filling 2104 is heated. During manufacturing, the heating portion 1130 can be oiled before insertion into the meat 244.

Oil improves thermal transfer to the meat 244 and also allows extraction of the heating portion 1130 from the meat 244 at the end of the heating.

Fig. 21 shows a cross-sectional view of another configuration of a food pack. The food pack comprises a foodstuff 3100, a heater 4106, an insulating cover 1208, a wrapper 250, and a wrapper 252. The foodstuff 3100 includes bread 3102 with a filling 3104. The heater 4106 comprises the insulated handle 1132 and a heating portion 2130 that is longer along its longitudinal axes compared to the heating portion 130. The bread 3102 and the filling 3104 are equivalents of the bread 102 and the filling 104 except for the fact that the heater 4106 (and with that corresponding insert section that is not specifically numbered) is configured along their entire longitudinal axis. The foodstuff 3100 further comprises a sweet food 248 that is also thermally coupled to the heating portion 3100. The filling 3104 has a nonsweet filling taste, e.g. - it can be salty, for instance the slice of grilled minced meat as shown in the first embodiment. Depending on the nature of the filling 3104 and sweet food 248, the sweet food 248 can be optionally packed in the wrapper 252 that prevents mixing of the filling taste and the sweet taste of the sweet food during heating and later extraction of the heating portion 130 from the foodstuff upon the end of the heating. A main (salty) dish followed by a warm desert is a combination favoured by many consumers and the configuration according to this figure follows such preference.

The sweet food can be e.g. a muffin. The heating element (not numbered/visible) inside the heating portion 2130 can have more heating zones generally differing in surface power density. That allows to heat e.g. the sweet food 248 to a lower temperature compared to the filling 3104. At least a part of the wrapping 250 can be transparent and expose so at least a part of the filling 3104 to consumers (in a shop). That allows the consumers to assess the freshness of the food pack. The wrappers 250, 252 shall be also directly usable for the heating and shall resist an (unintended) direct touch of the heating portion during use or at the end of the heating. Thus, they shall be fabricated from a food-contact approved material that can withstand the elevated temperature. Depending on the designed heating temperature, it can be made e.g. from a polypropylene foil (PP) having approximate melting temperature about 170 °C , PET or Nylon 6-6 foil having approximate melting temperature about 268 °C. Such material allows the sweet food 248 to be thermally coupled to the heating portion 3100 through the wrapping 252 as shown in the Fig 21.

The cover 1208 is folded below the foodstuff 3100 so that a consumer can push the heating portion 2130 inside the cover 1208 once the foodstuff is heated.

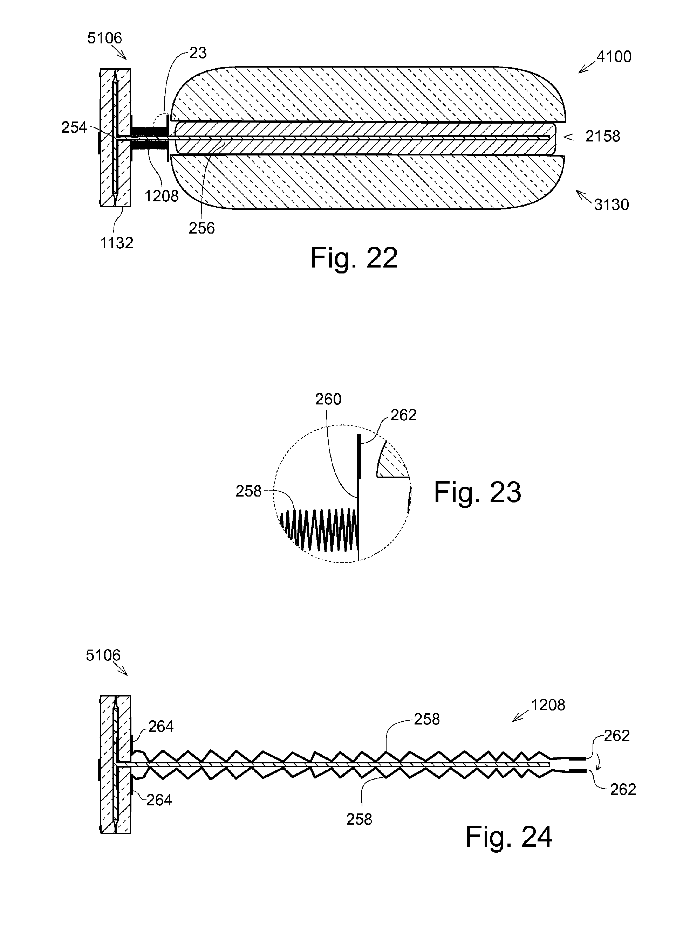

Figs. 22-24 show a food pack having another configuration of an insulating cover, wherein Fig. 22 is a cross-sectional view of the food pack, Fig. 23 is a detail of the cover shown in Fig. 22 and Fig. 24 is a cross-sectional view of a heater having covered its heating portion by the cover. Referring to Figs. 22-24: The food pack comprises a heater 5106 and a foodstuff 4100. The heater 5106 includes the insulated handle 1132 and a casing 2158. The casing 2158 has a cover section 254 and a heating section 256. The heating section 256 covers a heating element (not shown/numbered) and together with other elements (as shown in the first embodiment) constitutes a heating portion 3130. The cover section 254 supports a cover 1208. The cover 1208 comprises a couple of expandable concertina-folded portions 258, a couple of anchoring portions 264, and a couple end portions 260 each having a fastening section 262. Each anchoring portion 264 is attached to the insulated handle 1132, e.g. by gluing or by a staple. Both concertina-folded portions 258 are at their edges attached together (not shown in the cross section). Once the foodstuff 4100 is heated and removed from the heating portion 3130, concertina-folded portions 258 are pulled so that they cover the heating portion 3130. At the distal end of the heating portion 3130 (from handle 1132 perspective), the cover is sealed by the couple of fastening section 262 as indicated by an arrow in Fig. 24. The cover 1208 is preferably made from a thick paper or layered paper. The cover 1208 can be optionally strengthened by a reinforcing element (not shown), e.g. a thin PET spring incorporated in the paper. The element can so also support the pulling of the cover 1208.

Particular features disclosed in all above-mentioned illustrative embodiments can be freely combined. Similarly, many variations and modifications of them are possible which remain within the concept, scope, and spirit of the disclosed embodiments, and these variations would become clear to those of ordinary skill in the art after perusal of this application. Accordingly, the present embodiments are to be considered as illustrative and not restrictive, and the disclosed embodiments are not to be limited to the details given herein, but may be modified within the scope and equivalents of the appended claims.

### GLOSSARY

"Bread" is meant to be a food made at least from flour, water, and a leavening agent that are mixed together and baked. The leaving agent can be e.g. yeast, baking powder, dissolved carbon dioxide in the water, etc. It can be sweet, salty, etc.
"Filling" is an edible part disposed substantially inside the bread (e.g. e.g. meat, cheese, chopped apple slices, etc.)
"Insert section" is an opening or a cut in the foodstuff.
"Pack" refers to a group or a set of something.
"Adjacent" is meant to be very near, next to or touching.
"Disposable" refers to something that is primarily intended for a single use only.
"Extra-low voltage" refers to standardized voltage range (ELV) according IEC 60449, particularly to maximal potential difference of 50 V AC or 120 V ripple-free DC.
"Filling is disposed substantially inside the bread" means that either whole or at least a substantial part of the filling is inside the bread. Figs. 1 and 18 are examples wherein a part of the filling is outside the bread but majority is disposed inside, i.e. the filling is substantially inside the bread.
"Material substantially made from iron" refers to impurity content up to about 10%, including for instance a surface layer, e.g. a thin copper or an oxide film.
"Heating portion adapted to be disposed, in use, in the insert section" refers to either a configuration as shown in the figures 1, 18-21 or a a pack where the heater is either partially or fully separated from the foodstuff though configured in line with the insert section so that a consumer can insert it into the insert section to heat the foodstuff.
"Thermally coupled to at least a part of the filling" refers to a configuration where the heater, in use, can heat the at least a part of the filling. Figs. 1, 18 and 21 show configurations where the whole filling is coupled while Fig. 20 describes a configuration where only a part of the filling is thermally coupled. "Oiled" heating portion refers to any type of edible grease used for covering the heating portion. Indefinite article "a" or "an" carries the meaning of "one or more" in open-ended claims containing the transitional phrase "comprising".

Unless the meaning is clearly to the contrary, all ranges set forth herein are deemed to be inclusive of the endpoints.

## Claims

1. A food pack, comprising:
a foodstuff (100) including bread (102) and a filling (104) disposed substantially inside the bread, the foodstuff has an insert section (138) configured inside thereof; and
a disposable resistive heater (106) configured for use in a 12 volt vehicle and including:
a heating portion (130) adapted to be disposed, in use, in the insert section and thermally coupled to at least a part of the filling; and
a thermal one time fuse (128) configured to burn out upon exceeding a predetermined maximal allowed temperature of the heating portion.

2. The food pack according to the claim 1, wherein the insert section is configured inside the filling.

3. The food pack according to the claim 1, wherein the bread has a maximal projected first area (196) on a projection plane (198), the heating portion, in use, has a second area (200) projected on the projection plane, and the second area intersects 60% - 100% of the first area.

4. The food pack according to the claim 3, wherein the filling has a projected third area (202) on the projection plane and the third area, in use, intersects 60% - 100% of the second area.

5. The food pack according to the claim 1, wherein the food pack is wrapped in a wrapping (250), at least a part of the wrapping is transparent, exposing at least a part of the filling, and having a melting temperature between about 170 °C and about 268 °C.

6. The food pack according to the claim 1, wherein the heating portion is configured to reach a temperature between about 60 °C and about 230 °C in use.

7. The food pack according to the claim 1, wherein the heater further comprises an electric power connector (110) adapted for connecting the heater to a power supply.

8. The food pack according to the claim 1, wherein the heater comprises a resistive wire (124, 126) including an electrically conductive material substantially made from iron.

9. The food pack according to the claim 1, wherein the food pack further comprises an insulating cover (208, 1208) adapted for thermal insulation of the heating portion.

10. The food pack according to the claim 1, wherein the foodstuff further comprises sweet food separated from the filling, the filling has a non-sweet filling taste, and the sweet food is thermally coupled to the heating portion.

11. The food pack according to the claim 1, wherein the heating portion is oiled.

12. The food pack according to the claim 9, wherein the cover is expandable.
